# EUROPEAN PATENT APPLICATION

(11) **EP 4 826 661 A1**
(43) Date of publication of application: **21.10.2026**
(21) Application number: 26171299.6
(22) Date of filing: 08.04.2026
(51) Int. Cl.: G06T 12/20

(54) **SURFACE-GUIDED IMAGE RECONSTRUCTION**

(30) Priority: 17.04.2025 US 202519182555
(71) Applicant: Siemens Healthineers International AG, 6312 Steinhausen (CH)
(72) Inventor: STRZELECKI, Adam, 5405 Dättwil (CH); WILD, Michael Andreas, 5405 Dättwil (CH); HUBER, Michael, 5405 Dättwil (CH)
(74) Representative: Mathisen & Macara LLP

(57) **Abstract**

Example methods (100) and systems (200) for image reconstruction (150) based on surface data (110) are described. In one example, a computer system (240) may obtain surface data (110) and projection image data (120) associated with a patient (201) positioned on a couch (203). The surface data (110) may be generated using a surface monitoring system (230). The projection image data (120) may be acquired using the imaging system (220). The computer system (240) may perform image reconstruction (150) to generate volume image data (160) associated with the patient (201) based on one of the following: (a) processed projection image data (140) that is generated based on the projection image data (120) and the surface data (110); (b) the surface data (110) and the projection image data (120); and (c) the surface data (110) and the processed projection image data (140).

## Description

### TECHNICAL FIELD

This invention relates to a non-transitory computer-readable medium, a system and a method for performing image reconstruction.

### BACKGROUND

Radiation therapy is a widely used cancer treatment modality that uses high-energy radiation to reduce or eliminate cancerous tumors. In practice, applied radiation does not inherently discriminate between a tumor and proximal healthy structures, such as organs, healthy tissues, etc. Ideally, the objective is to deliver a lethal or curative radiation dose to the tumor, while maintaining an acceptable dose level in the healthy structures. Image reconstruction may be performed to generate volume image data based on projection image data associated with a patient. Based on the volume image data, clinicians and planning tools may more accurately target tumors while sparing healthy structures from unnecessary radiation exposure. It is therefore desirable to improve the quality of image reconstruction to enhance the efficacy of radiation therapy and ultimately improve patient outcomes.

### BRIEF DESCRIPTION OF DRAWINGS

FIG. 1 is a flowchart of an example process for a computer system to perform surface-guided image reconstruction;
FIG. 2 is a schematic diagram illustrating an example system for surface-guided image reconstruction;
FIG. 3 is a schematic diagram illustrating a first example system for surface-guided image reconstruction during an optional treatment phase of radiation therapy, featuring a gantry with a C-arm configuration;
FIG. 4 is a schematic diagram illustrating a second example system for surface-guided image reconstruction during an optional treatment phase of radiation therapy, featuring a gantry with a ring-based configuration;
FIG. 5 is a schematic diagram illustrating an example process for surface data generation using a surface monitoring system;
FIG. 6 is a flowchart of an example process for a computer system to perform pre-processing of projection image data and surface-guided image reconstruction;
FIG. 7 is a schematic diagram illustrating an example process for a computer system to process surface data to determine an entry point, an exit point and a cross-section length associated with a ray;
FIG. 8 is a flowchart of an example process for a computer system to implement iterative image reconstruction in the example in FIG. 6;
FIG. 9A is an example voxelized distance map associated with surface data that includes convex hull data;
FIG. 9B is an example 2D cylindrical depth map associated with surface data that includes convex hull data;
FIG. 10A is a schematic diagram illustrating a first example artificial intelligence (AI) engine to perform image reconstruction based on processed projection image data;
FIG. 10B is a schematic diagram illustrating a second example AI engine to perform image reconstruction based on surface data and projection image data;
FIG. 10C is a schematic diagram illustrating a third example AI engine to perform image reconstruction based on surface data and processed projection image data; and
FIG. 11 is a schematic diagram illustrating an example system for surface-guided image reconstruction during a pre-treatment phase of radiation therapy.

### SUMMARY

In accordance with a first facet of the invention, there is provided a non-transitory computer-readable medium as defined by claim 1.

In accordance with a second facet of the invention, there is provided a system as defined by claim 7.

In accordance with a third facet of the invention, there is provided a method as defined by claim 12.

Optional features are defined by the dependent claims.

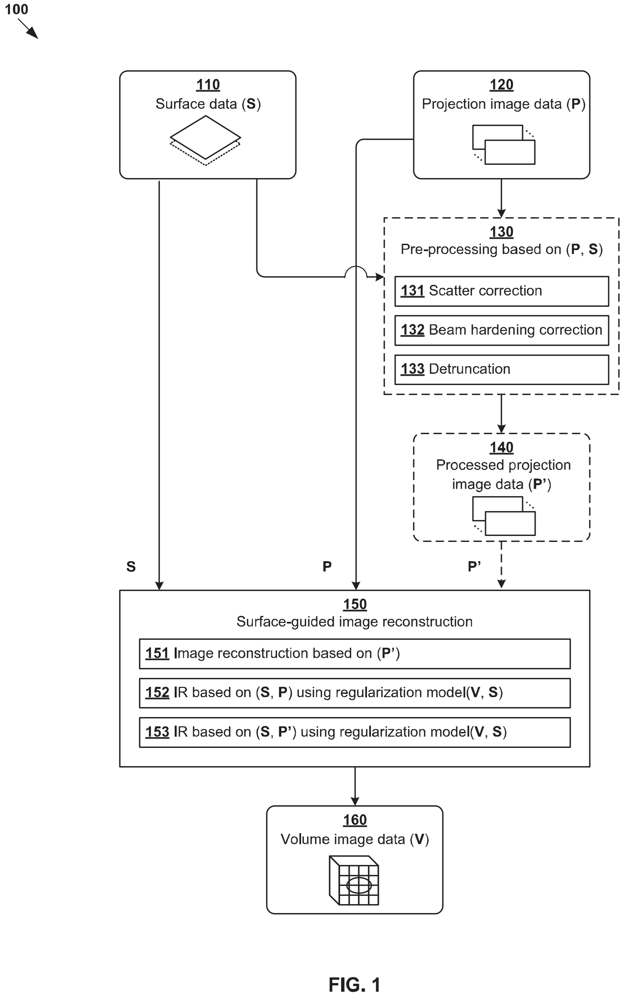

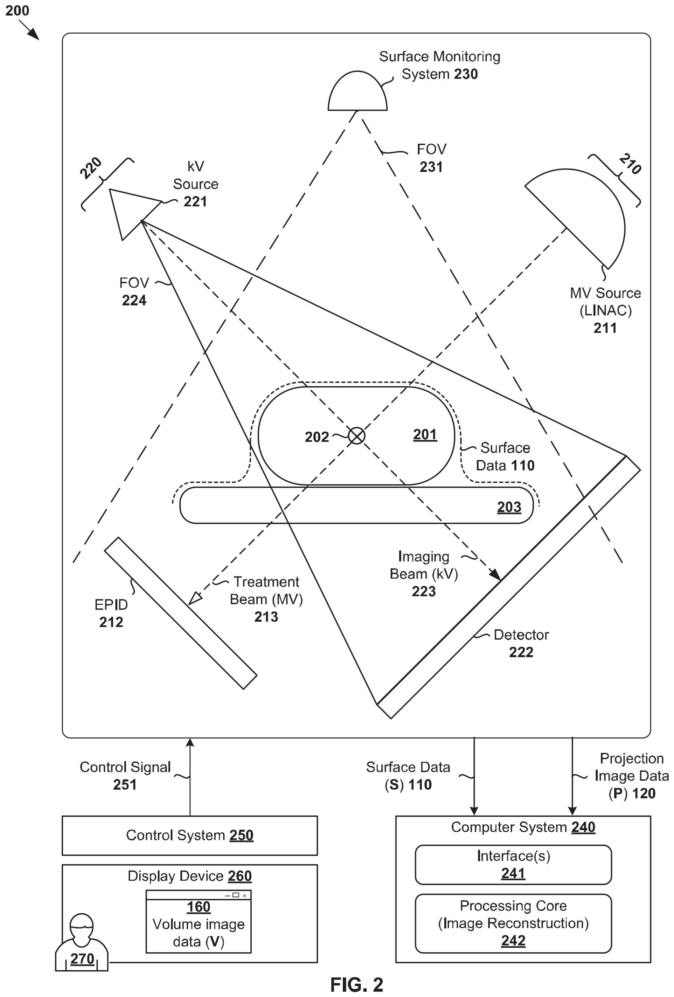

According to examples of the present disclosure, surface-guided image reconstruction may be performed to improve the quality of image reconstruction, leading to improved clinical workflows and patient outcomes. In a first aspect of the present disclosure, there is provided a computer system that includes a processor and a non-transitory computer-readable medium having stored thereon instructions that, when executed by the processor, cause the processor to perform image reconstruction based on surface data. In one example, the computer system (see 240 in FIG. 2) may obtain surface data (see 110 in FIG. 1) and projection image data (see 120 in FIG. 2) associated with a patient. The surface data may be generated using a surface monitoring system (see 230 in FIG. 2). The projection image data may be generated using an imaging system (see 220 in FIG. 2).

Using examples of the present disclosure, the computer system may perform image reconstruction to generate volume image data associated with the patient based on one of the following: (a) processed projection image data (see 140 in FIG. 1) that is generated based on the projection image data and the surface data; (b) the surface data and the projection image data; and (c) the surface data and the processed projection image data. In at least some embodiments, the surface data from the surface monitoring system may provide additional value for image reconstruction because it carries substantially independent spatial data from a modality perspective (e.g., transmission/attenuation vs depth) and/or a geometrical perspective (e.g., observing a patient from two independent positions in space), thereby enhancing the image reconstruction process. Various embodiments will be explained using FIGs. 1-11.

In a second aspect of the present disclosure, there is provided a system that includes a surface monitoring system (see 230 in FIG. 2) to generate surface data associated with a patient positioned on a couch; an imaging system (see 220 in FIG. 2) that includes an imaging source and a detector to acquire projection image data associated with the patient; and a computer system (see 240 in FIG. 2) to perform image reconstruction to generate volume image data according to the first aspect. In a third aspect of the present disclosure, there is provided a method for image reconstruction performed by the above computer system.

A further aspect may include a non-transitory computer-readable storage medium that includes a set of instructions which, in response to execution by a processor of the above computer system, cause the processor to perform image reconstruction according to the first aspect. Yet a further aspect may include a computer program or program code comprising instructions which, when executed by a processor or a computer, cause the processor or the computer to perform image reconstruction according to the first aspect.

Optionally, the iterative image reconstruction may be guided by surface-related constraints.

Optionally, a combination of an imaging system and a surface monitoring system may be used to establish an envelope around the scanned body, which may be used to constrain and/or guide image reconstruction. For example, artifacts outside the scanned may be reduced. Air voxels may be excluded from image reconstruction.

Optionally, the surface data may be processed to determine an entry point, an exit point and/or a cross-section length associated with a ray emitted by the imaging system. The surface data may be used to inform scatter correction, beam hardening correction and detruncation, prior to image reconstruction.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the scope of the subject matter presented here. It will be readily understood that the aspects of the present disclosure, as generally described herein, and illustrated in the drawings, can be arranged, substituted, combined, and designed in a wide variety of different configurations, all of which are explicitly contemplated herein. Independent of the grammatical term usage, individuals with male, female or other gender identities are included within the term.

Although the terms "first" and "second" are used to describe various elements, these elements should not be limited by these terms. These terms are used to distinguish one element from another. For example, a first element may be referred to as a second element, and vice versa. As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such. For simplicity, the same reference numerals are used for like components in the drawings.

### Overview

Imaging technologies, such as computed tomography (CT), positron emission tomography (PET), positron emission tomography-computed tomography (PET-CT), cone-beam computed tomography (CBCT), single photon emission computed tomography (SPECT), magnetic resonance imaging (MRI), magnetic resonance tomography (MRT), and image-guided radiotherapy (IGRT), are currently used in clinical settings. These technologies may be implemented to diagnose a wide range of diseases, support surgical procedures, and facilitate accurate patient positioning prior to radiation therapy. To facilitate visualization of a patient's internal anatomy, image reconstruction may be performed to generate three-dimensional (3D) volume image data of a patient's internal anatomy based on two-dimensional (2D) projection image data (also known as projections) that is acquired using an imaging system.

As used herein, the term "image reconstruction" may refer generally to a process for generating volume image data based on projection image data. The term "projection image data" (used interchangeably with "2D projection data," "2D projection image" and "projections") may refer generally to data representing properties of illuminating radiation rays transmitted through a subject (e.g., patient). The term "volume image data" (also known as "reconstruction" or "reconstructed image") may refer generally to data representing a 3D reconstruction that is generated based on projection image data.

In practice, imaging systems may be coupled with surface monitoring systems to verify a patient's position and/or track their movement. Surface-guided radiation therapy (SGRT) is a technique that uses a surface monitoring system for patient positioning and/or motion management during radiation therapy. For example, SGRT may be used for visual tracking of a patient before and during radiation therapy. In practice, SGRT using optical surface scanning is a relatively fast, non-invasive imaging technique with a substantially large field of view (FOV), without using ionizing radiation. These features make SGRT suitable for patient setup and motion monitoring to reduce localization uncertainty.

For example, SGRT may be implemented to reduce localization uncertainties in fractionated radiation therapy, where the total radiation dose delivered to a tumor is divided into smaller fractions. This allows healthy cells to recover in between fractions from the damage caused by radiation, while tumor cells that are less efficient at recovering may accumulate damage. During fractionated radiation therapy, localization uncertainties may arise due to inter-fraction and infra-fraction deviations. Inter-fraction deviation may occur from one treatment to the next treatment, often resulting from daily setup variations or radiation-induced inflammatory swelling, etc. Intra-fraction deviation may develop during the radiation delivery process. Both types of deviation may be caused by changes in the patient's position or posture, internal anatomical motion through physiological processes such as breathing, or other physiological variability such as bladder and bowel filing or weight gain/loss, etc.

By integrating imaging systems with surface monitoring systems, a patient's position may be tracked and adjusted to localize their target structure (e.g., tumor) with a higher degree of accuracy. Enhanced patient positioning not only improves the accuracy of treatment delivery to the target structure but also reduces radiation exposure to surrounding healthy tissues. This leads to improved treatment precision, enabling the safe and effective delivery of the prescribed dose while accommodating motion and/or posture changes. In practice, it is desirable to utilize surface monitoring systems to enhance clinical workflows beyond patient positioning and/or motion monitoring.

### Surface-guided image reconstruction

According to examples of the present disclosure, the integration of imaging systems and surface monitoring systems may be leveraged to enhance the image reconstruction process. During image reconstruction, it is desirable to achieve the highest image quality possible within the shortest amount of image reconstruction time. In practice, surface data may add substantial value during image reconstruction because it provides substantially independent spatial data, obtained from a well-calibrated and/or coordinate-coupled system. By incorporating surface data into the image reconstruction process, the surface data may complement projection image data by introducing geometric constraints, reducing artifacts in the projection image data, and/or enhancing the quality of image reconstruction.

As used herein, the term "surface-guided image reconstruction" may refer generally to an image reconstruction process that is performed based on surface data. The term "surface data" may refer generally to data representing a patient's surface, such as an outer surface on the patient's anatomy, etc. The term "surface monitoring system" or "optical surface scanning system" may refer generally to any suitable system(s) configured to generate surface data associated with a patient. A surface monitoring system may include any suitable hardware, software and/or firmware.

In more detail, FIG. 1 is a flowchart of an example process (see 100) for a computer system to perform surface-guided image reconstruction. Example process 100 may include one or more operations, functions, or actions illustrated by one or more blocks, such as 110 to 160. Depending on the desired implementation, various blocks may be combined into fewer blocks, divided into additional blocks, and/or eliminated. Any suitable computer system may be configured to perform the example in FIG. 1, such as computer system 240 (or simply "computer") in FIGs. 2-5, etc.

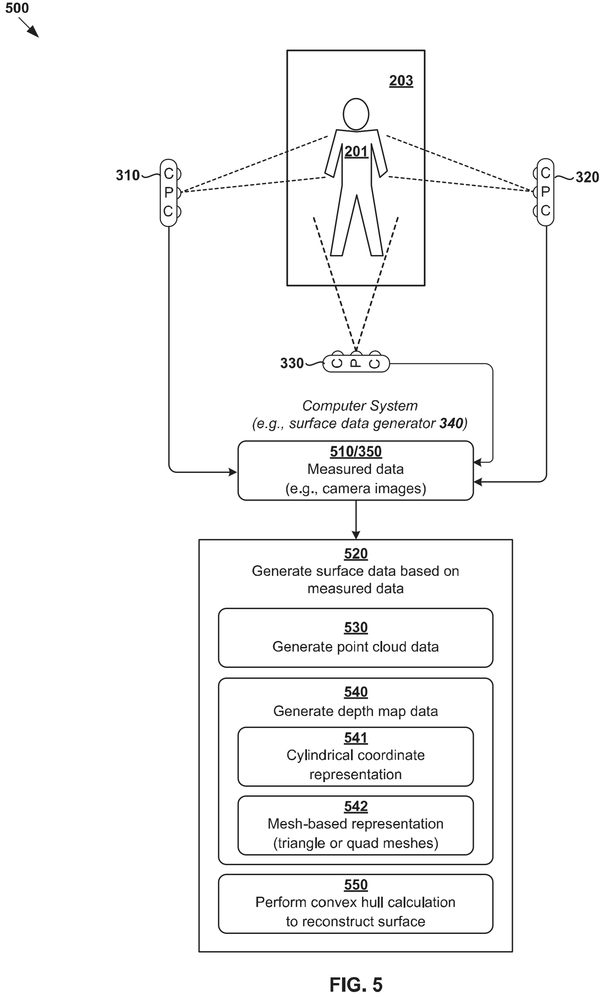

At 110 in FIG. 1, computer system 240 may obtain surface data (denoted as ***S***) associated with a patient positioned on a couch of an imaging system. Surface data 110 may be generated using a surface monitoring system without additional radiation dose. As used herein, the term "obtain" or "obtaining" may refer generally to receiving or retrieving data from any suitable source, such as an external system, a component of the same computer system, or a datastore storing the data. As will be described using FIG. 5, surface data 110 may include any suitable data representing a patient's surface, such as 3D point cloud data, 2D depth map data, and/or convex hull data, etc.

Any suitable surface monitoring system(s) may be used. Examples include cameras, infrared projectors, light pattern projectors, light detection and ranging (LIDAR) technology, stereo-vision systems, time-of-flight systems, laser scanners, or any combination thereof. For example, red-green-blue (RGB) cameras may be used to capture color-detailed images of a patient's surface. Infrared projectors may be configured to project invisible patterns of light onto a surface, which are then captured and processed to create a 3D representation of the surface. LIDAR technology uses pulses to measure distances and generate detailed depth maps to track a patient's surface in 3D.

At 120 in FIG. 1, computer system 240 may obtain projection image data (denoted as ***P***) associated with the patient. Projection image data 120 may be acquired using an imaging system that includes at least one imaging source and a detector. Projection image data 120 may be acquired by imaging target structure(s) of the patient. The term "target structure" may refer generally to any suitable structure of interest, such as tumor, organ-at-risk (OAR), healthy tissue, bony structure (e.g., vertebra), etc. Projection image data 120 is not limited to being obtained from a single detector; it could originate from multiple sources, angles, energy levels, or even imaging modalities.

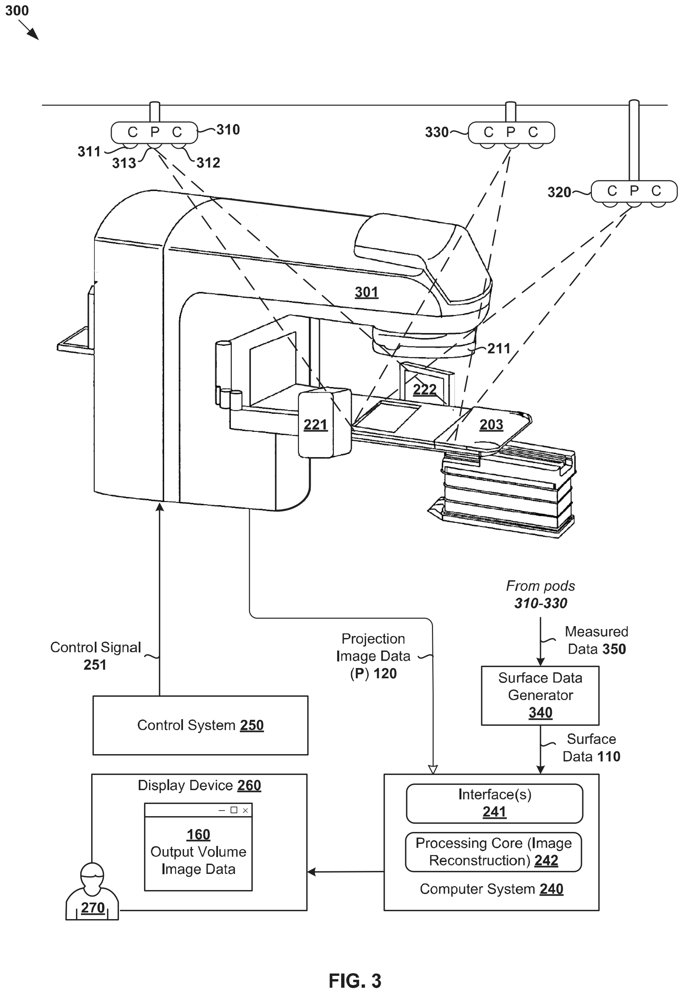

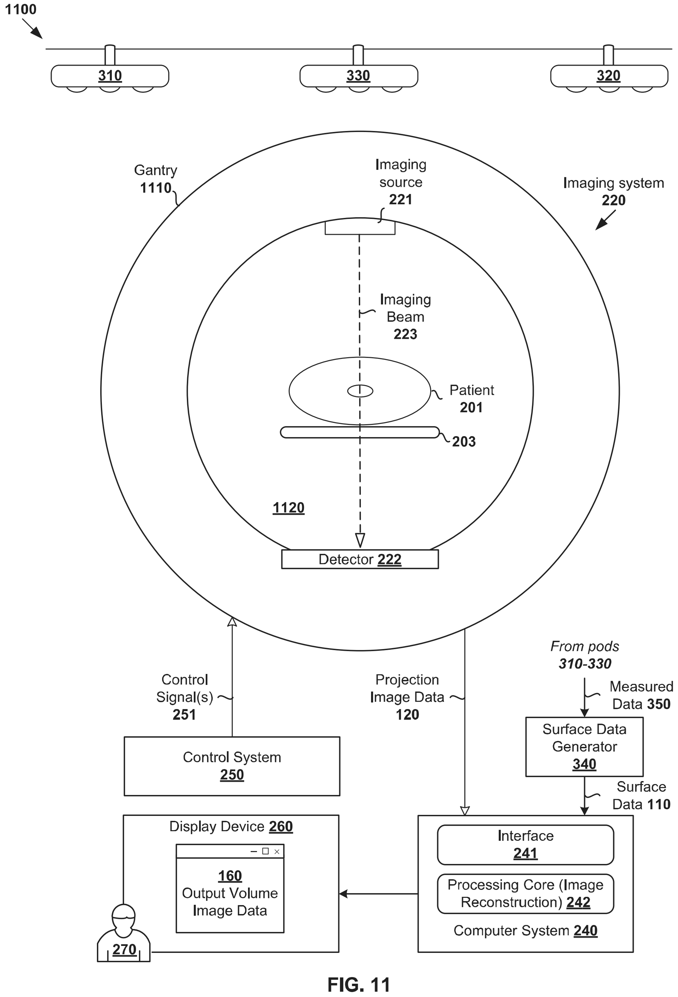

Depending on the desired implementation, surface data 110 and projection image data 120 may be acquired during an optional treatment phase (see FIGs. 3-4) and/or a pre-treatment phase (see FIG. 11) of radiation therapy. Note that surface data 110 may be associated with a single time point, such as a particular time point that occurs right before the acquisition of projection image data 120. Alternatively or additionally, surface data 110 may be associated with a series of time points, in which case surface data 110 may be measured continuously or at various intervals during the acquisition of projection image data 120.

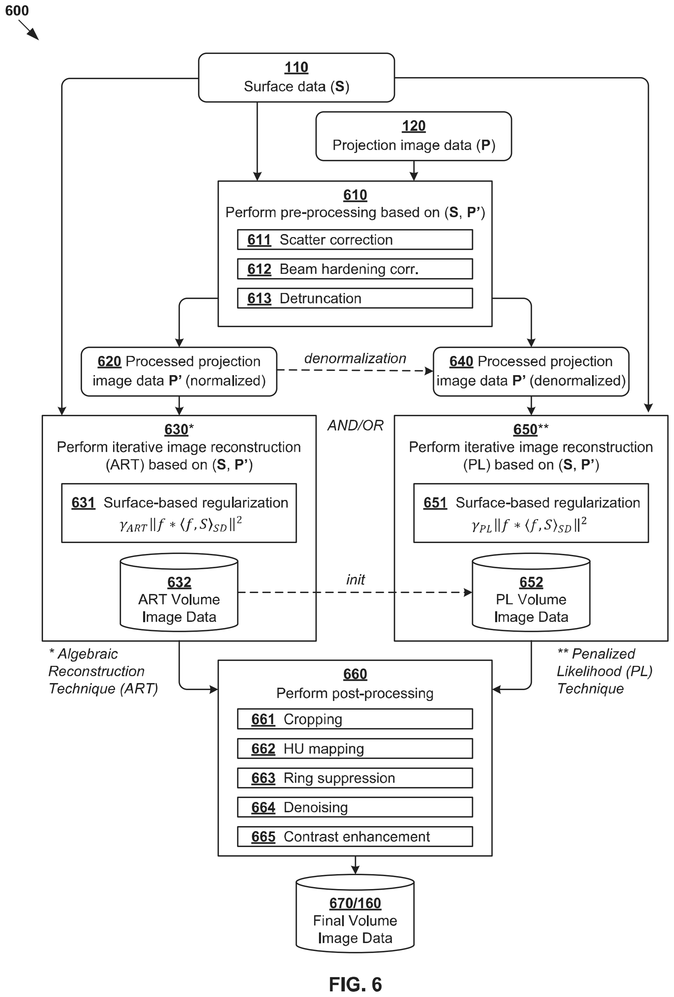

At 130-140 in FIG. 1, computer system 240 may perform one or more artifact correction operations to generate processed projection image data (denoted as ***P***') based on surface data 110 and projection image data 120. In practice, block 130 may be optionally performed to reduce artifacts in projection image data 120 using surface data 110. Any suitable pre-processing operation(s) may be performed, such as scatter correction (see 131), beam hardening correction (see 132), and/or detruncation (see 133), etc. Some examples will be described using FIGs. 6-7. As will be explained further below, beam hardening correction may be performed as a standalone process, or in combination with additional operation(s), such as intensity-to-attenuation mapping based on log normalization and/or intensity-to-material-length mapping, etc.

At 150 in FIG. 1, computer system 240 may perform surface-guided image reconstruction to generate volume image data (***V***) 160 using one of blocks 151-153. In a first example (see 151), image reconstruction may be performed based on ***P'*** 140. In a second example (see 152), image reconstruction may be performed based on based on (***S**, **P***)*.* In a third example (see 153) where block 130 is performed, image reconstruction may be performed based on (***S***, ***P**'*)*.* Using examples of the present disclosure, ***V*** 160 may represent a solution that is constrained by surface data 110, leading to improved quality and/or efficiency of the image reconstruction process.

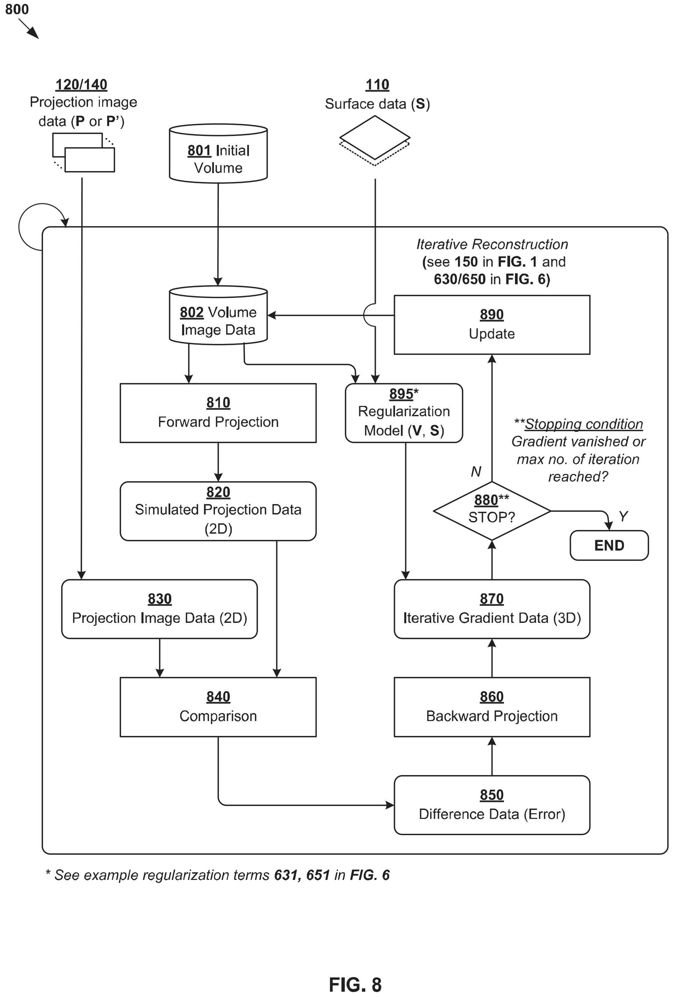

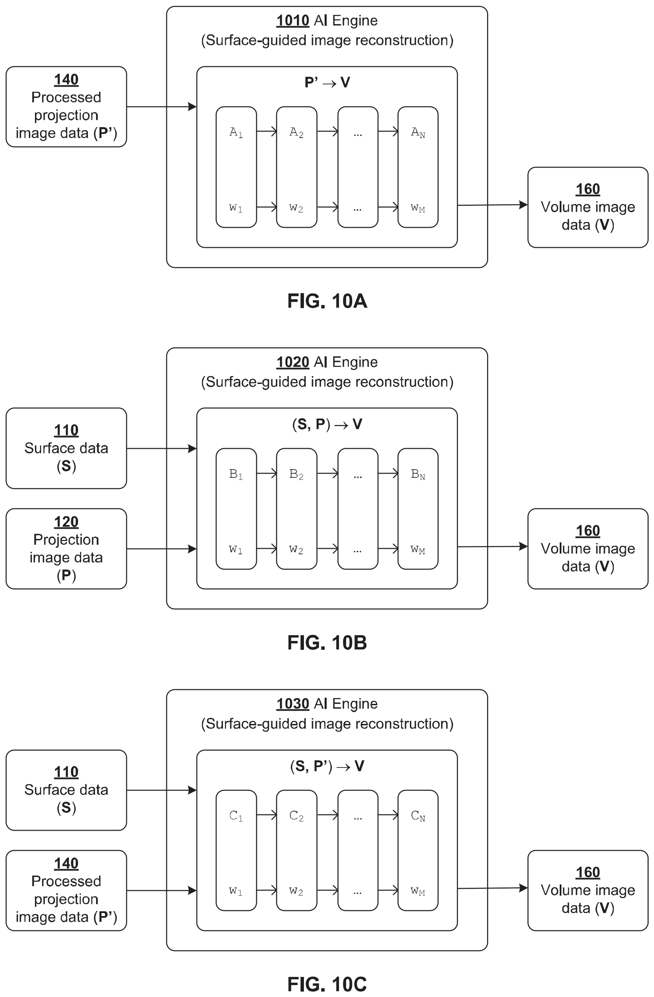

Block 150 may be implemented based on any suitable image reconstruction algorithm, such as any combination of one or more of: iterative reconstruction, filtered backprojection (FBP) algorithm, Feldkamp-David-Kress (FDK) algorithm, Defrise-Clack algorithm, iterative reconstruction with metal artifact reduction (MAR), four-dimensional (4D) reconstruction, image reconstruction using an artificial intelligence (AI) engine, etc. For example, block 151 may be implemented using, for example, the FBP algorithm, FDK algorithm, or Defrise-Clack algorithm, iterative reconstruction, etc. For example, blocks 152-153 may involve performing an iterative reconstruction process based on (***S**, **P***) or (***S***, ***P'***)*,* such as by applying a regularization model that includes a parameter associated with ***S*** to enhance quality. Example image reconstruction with regularization will be explained using FIGs. 6 and 8. AI-based approaches will be explained using FIGs. 10A-C.

In practice, FBP may involve applying a filter to projection data before backprojecting it onto an image plane. The FDK and Defrise-Clack algorithms extend the FBP algorithm to account for the geometry of cone-shaped X-ray beams. Iterative reconstruction is a process for improving the quality of reconstructed images through repeated refinement over multiple iterations. Iterative reconstruction with MAR may involve reducing artifacts caused by a metal implant in a patient. 4D reconstruction may be implemented to extend the concept of 3D image reconstruction by incorporating a fourth dimension (e.g., time) to allow for the reconstruction of dynamic processes, such as respiratory or cardiac motion over time. This is particularly valuable in radiation therapy, where understanding the motion of tumors relative to surrounding tissues helps to improve treatment planning and delivery. Various examples relating to blocks 110-160 will be explained further below.

### Example systems

FIG. 2 is a schematic diagram illustrating an example system (see 200) for surface-guided image reconstruction. In this example, system 200 may include a treatment delivery system (see 210), an imaging system (see 220), a surface monitoring system (see 230), and a computer system (see 240) to perform image reconstruction. Depending on the desired implementation, system 200 may include additional and/or alternative components than that shown in FIG. 2.

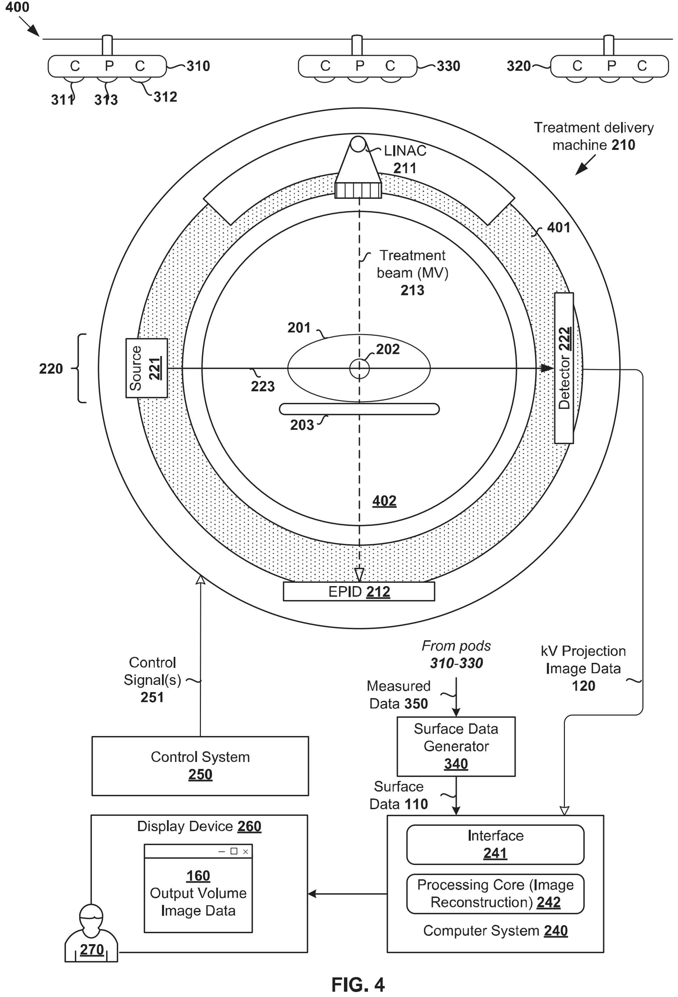

Treatment delivery system 210 may include a radiation source in the form of linear accelerator (LINAC) 211 and an imager/detector in the form of MV electronic portal imaging device (EPID) 212. LINAC 211 may be configured to generate and direct treatment beam 213 towards iso-center 202 of patient 201 positioned on couch 203. In practice, treatment beam 213 may be within a high-energy range, such as 1 mega-electron volts (MV) or greater. Although described with reference to LINAC 211 and MV treatment beam 213, it should be understood that any additional or alternative treatment delivery technique(s) may be used, such as a proton treatment machine, etc. Treatment delivery system 210 may include a gantry that is rotatable about couch 203. As will be described further below, the gantry may have a C-arm configuration (see FIG. 3) or ring-based configuration (see FIG. 4).

On-board imaging system 220 may include at least one imaging source 221 and at least one imager 222 to facilitate kilovolt (kV) imaging optionally during the application of MV treatment beam 213. Compared to LINAC 211, kV imaging source 221 may be capable of producing imaging or diagnostic energy in the range of kV. Any suitable imaging modality or modalities may be used, such as single-energy (SE) or double-energy (DE) CBCT, etc. During optional treatment delivery, control system 250 (e.g., using control signals 251) may configure kV imaging source 221 to emit and direct kV imaging beam 223 through patient 201 towards imager/detector 222. Detector 222 may measure the X-ray absorption and produce a voltage proportional to the intensity of incident X-rays. The voltage may be read and digitized to generate projection image data 120. Projection image data 120 may include image data acquired at different gantry angles.

To facilitate SGRT, surface monitoring system 230 may be installed in an imaging or treatment room to generate surface data 110 representing a patient's outer surface. Surface monitoring system 230 may be configured to have a larger FOV (see 231) compared to the FOV (see 224) of kV imaging system 220. Based on surface data 110 and projection image data 120, computer system 240 may be configured to perform image reconstruction according to block 150 in FIG. 1. The output of image reconstruction, i.e., volume image data 160, may be displayed on display device 260 for a user (e.g., clinician 270) to view and interact with it.

Depending on the desired implementation, computer system 240 may include any suitable hardware, software and/or firmware modules or components, such as interface(s) 241 to interact with surface monitoring system 230 and/or imaging system 220; and processing core(s) 242 to perform pre-processing of projection image data 120 and image reconstruction based on surface data 110. Image reconstruction may be performed during an optional treatment phase of radiation therapy (see FIGs. 3-4), or a pre-treatment phase of radiation therapy (see FIG. 11). During the optional treatment phase, image reconstruction may be performed facilitate image-guided radiation therapy, such as to verify patient positioning to ensure that the patient is aligned with a treatment plan, and/or to facilitate motion management to detect infra-fraction motion.

### Example surface data generation

One example surface monitoring system is the IDENTIFY^{™} system from Varian Medical Systems, which will be described further using FIGs. 3-4. In a first example, FIG. 3 is a schematic illustrating a first example system (see 300) for surface-guided image reconstruction during an optional treatment phase of radiation therapy, featuring a gantry with a C-arm configuration. Here, LINAC 211 and an EPID (not shown) may be supported by a gantry (see 301) with a C-arm configuration. During volumetric modulated arc therapy (VMAT), gantry 301 may be rotated through a treatment arc, allowing LINAC 211 to emit and direct MV treatment beams 213 from various angles towards couch 203. Control system 250 may be electrically coupled to gantry 301 to control the latter's rotation using control signal(s) 251.

In a second example, FIG. 4 is a schematic illustrating a second example system (see 400) for surface-guided image reconstruction during an optional treatment phase of radiation therapy, featuring a gantry with a ring-based configuration. Here, the ring-based configuration involves a circular gantry (see 401) encircling patient 201 positioned on couch 203 within an opening (see 402). During radiation therapy, closed-bore LINAC 211 may be moved along circular gantry 401 to direct MV treatment beams towards patient 201 from various angles. Control system 250 may be electrically coupled to gantry 401 to control the latter's rotation using control signal(s) 251. In practice, both the C-arm and ring-based configurations provide versatility and precision. The choice between them depends on any suitable factors, such as the clinical requirements, target anatomy, and desired treatment modality.

In both examples, surface monitoring system 230 may include multiple pods (see 310-330) to perform optical surface scanning and a surface data generator (see 340) to generate surface data 110. For example, three pods (see 310-330) may be mounted on the ceiling of a treatment or imaging room. Each pod 310/320/330 may include a pair of stereoscopic cameras (labelled "C") and a random pattern projector (labelled "P"). For example, with reference to first pod 310, a random pattern projector (see 313) may be configured to project a light pattern onto the external surface of patient 201, such as a random pattern generated using LED light, etc. The pair of stereoscopic cameras (see 311-312) may be configured to capture camera image data associated with a surface of patient 201, particularly the projected pattern on patient 201. Using the principle of triangulation, surface data generator 340 may obtain and process measured data 350 from pods 310-330 to generate surface data 110. In practice, surface monitoring system 230 may include random pattern projector(s) to improve the speed and accuracy of surface reconstruction, such as for smooth and/or nearly flat surfaces with relatively low optical variation. In at least some embodiments, it may not be necessary to use such random pattern projector(s).

FIG. 5 is a schematic diagram illustrating an example process (see 500) for surface data generation using surface monitoring system 230. In practice, surface monitoring system 230 may include any suitable hardware, software or firmware to process raw data (e.g., measured data 350) acquired using multiple pods 310-330, such as surface data generator 340 in FIGs. 3-4, etc. Note that surface data generator 340 may be implemented using computer system 240, or a different computer system.

At 510 in FIG. 5, surface data generator 340 may obtain measured data 350 collected using multiple ceiling-mounted pods 310-330 from different angles. Measured data 350, such as camera image data, may capture distortions in the light patterns projected by pods 310-330. These distortions may result from the surface contours and anatomical geometry of patient 201 positioned on couch 202. Variations in surface topography, which are derivable from these distortions, are useful for surface data generation.

Any suitable number of pods and mounting positions may be used. When surface monitoring system 230 is used with the C-arm configuration in FIG. 3, one pod (see 330) may be mounted on the ceiling and centrally located above the foot-end of couch 203. The other two pods (see 310-320) may be mounted on the ceiling on either side of couch 203. Alternatively (not shown), when used with the ring-based configuration in FIG. 4, the position of pods 310-330 may be adjusted to prevent or reduce camera blockage by closed-bore LINAC 211. In this case, two pods may be mounted at the sides of patient 201, and a third pod above the head-end of couch 203 (instead of the foot-end shown in FIG. 5).

At 520 in FIG. 5, surface data generator 340 may generate surface data 110 based on measured data 350 from pods 310-330. Depending on the desired implementation, surface data 110 may include any combination of one or more of the following: 3D point cloud data (see 530), 2D depth map data (see 540) and convex hull data (see 550).

In more detail, at 530 in FIG. 5, surface data generator 340 may process measured data 350 to generate 3D point cloud data associated with patient 201. For example, the point cloud data may include a set of discrete points (*x, y,* z) representing the surface in 3D space. Each point may correspond to a surface coordinate based on the relative angles and distances measured using pods 310-330. Using the principle of triangulation, the location of each point within the projected pattern may be calculated.

At 540 in FIG. 5, surface data generator 340 may process measured data 350 and/or the point cloud data to generate depth map data associated with patient 201. The depth map data may include an array of pixel data that represents the patient's surface in 2D space. Each pixel data may correspond to depth value indicating the distance between a point on the patient's surface and the camera(s) of surface monitoring system 230. Any suitable representation may be used for the depth map data, such as cylindrical coordinates, and/or mesh-based representation, etc.

For example, using cylindrical coordinates (see 541 in FIG. 5), each point in the depth map data may be described using three components (*r, θ*, *z*), where *r =* radial distance from the point to a cylinder's central axis, *θ* = angular position of the around the central axis, and *z* = height or vertical position along the central axis. Cylindrical coordinates are useful for panoramic or cylindrical projections of surface data, such as for capturing curved surfaces. In another example, using a mesh-based representation (see 542 in FIG. 5), a surface may be divided into smaller geometric elements, such as triangular elements for triangle meshes, quadrilateral elements for quad meshes, etc. Each vertex in the mesh may represent a specific point in depth map data 540. Triangle and quad meshes are useful for representing complex curved surface, such as the patient's external anatomy.

At 550 in FIG. 5, surface data generator 340 may perform convex hull calculation to generate a convex hull or a reconstructed surface based on any combination of one or more of the following: measured data 350, the point cloud data from block 530 and the depth map data from block 540. As used herein, the term "convex hull" may refer generally to a boundary, shell, or shape that encloses a set of points. For example, a convex hull may represent the smallest convex shape that encloses a set of points representing the surface of patient 201.

Depending on the desired implementation, surface data generator 340 may implement any suitable surface reconstruction algorithm(s). Some examples may be found in the following publications, which are incorporated herein by reference. A first publication is titled "Three-dimensional alpha shapes" by Edelsbrunner, Herbert, and Ernst P. Mücke, published in ACM Transactions on Graphics (TOG) 13, no. 1 (1994), pages 43-72. This approach involves constructing a geometric representation of a surface from a set of points in 3D space by leveraging the concept of alpha shapes. Specifically, an initial convex hull that represents a general boundary may be first generated, before it is iteratively refined to capture finer details and non-convex features of the surface by adjusting parameters.

A second publication is titled "The ball-pivoting algorithm for surface reconstruction" by Bernardini, Fabio, Joshua Mittleman, Holly Rushmeier, Claudio Silva, and Gabriel Taubin, published in IEEE Transactions on Visualization and Computer Graphics 5, no. 4 (1999), pages 349-359. A ball-pivoting algorithm (BPA) may be implemented to generate a mesh that connects a set of discrete points. The BPA algorithm involves using a rolling "ball" of a specified radius that pivots around the points before stitching them together into triangles to form a surface.

A third publication is titled "Poisson surface reconstruction" by Kazhdan, Michael, Matthew Bolitho, and Hugues Hoppe, published in the Eurographics Symposium on Geometry Processing, 2006, pages 61-70. This approach represents the surface as a solution to a Poisson equation. Additionally or alternatively, an artificial intelligence (AI) model may be trained to generate surface data 110 based on raw data 510 acquired using pods 310-330.

### Example pre-processing of projection image data

FIG. 6 is a flowchart of an example process (see 600) for a computer system to perform pre-processing of projection image data and surface-guided image reconstruction. Example process 600 in FIG. 6 may include one or more operations, functions, or actions illustrated by one or more blocks, such as 610 to 670. Depending on the desired implementation, various blocks may be combined into fewer blocks, divided into additional blocks, and/or eliminated. The example in FIG. 6 may be performed using computer system 240, particularly processing core(s) 242, etc.

At 610 in FIG. 6, based on surface data 110 and projection image data 120, computer system 240 may perform one or more pre-processing operations to generate processed projection image data (***P'***) 620/640. Any suitable pre-processing operation(s) may be performed at block 610, such as scatter correction (see 611), beam hardening correction (see 612), detruncation (see 613), hardware defect correction, non-linearity correction, or any combination thereof. ***P'*** may be normalized (see 620) or denormalized (see 640). In practice, pre-processing may be performed on a projection basis while data acquisition is still running during a scan. For example, first pass scatter correction, log normalization and/or beam hardening corrections may be projection-based operations.

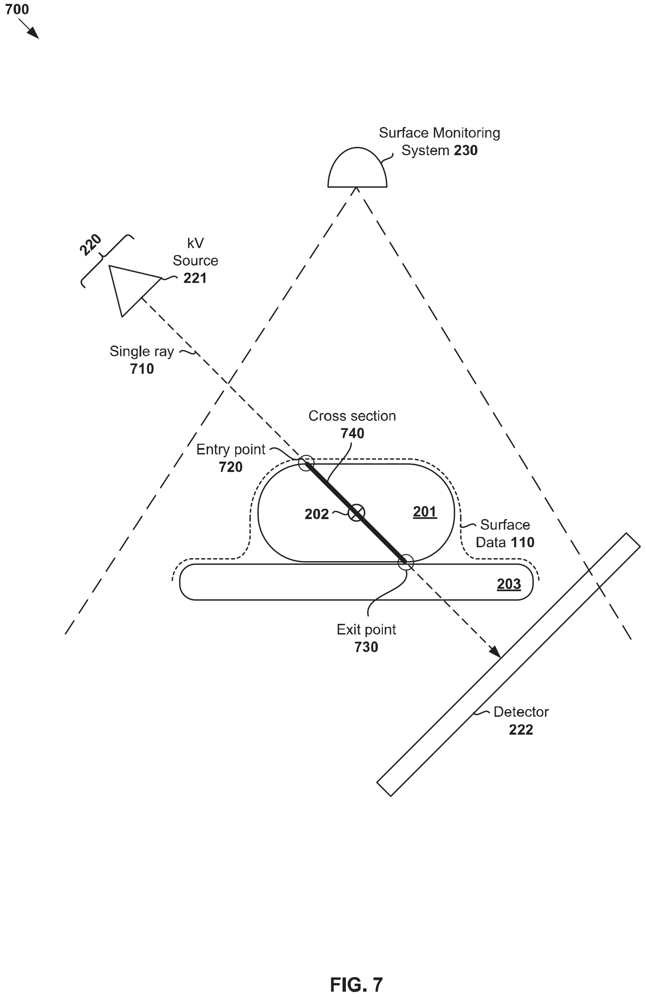

Some examples will be explained using FIG. 7, which is a schematic diagram illustrating an example processing (see 700) of surface data 110 to determine an entry point, an exit point and a cross-section length associated with a ray. In the example in FIG. 7, a single ray (see 710) emitted by source 221 in FIG. 3 or FIG. 4 is shown. For each projection, at least one ray may be assigned for each pixel (e.g., pixel center point). Based on surface data 110 that identifies a convex hull (object) associated with patient 201, computer system 240 may determine an entry point (see 720) and an exit point (see 730) associated with ray 710. The convex hull may represent a minimal convex boundary enclosing a set of points representing a surface of patient 201. Entry point 720 is where ray 710 first intersects with the convex hull. Exit point 730 is where ray 710 exits patient 201.

Depending on the desired implementation, the determination of exit point 730 may be performed based on surface data 110 and any suitable couch model. For example, a representation of couch 203 may be reduced to a plane. In this case, the estimation of exit point 730 may be based on a line-plane intersection between a line representing ray 710 and the plane representing couch 203. Additionally, based on entry point 720 and exit point 730, computer system 240 may determine a cross-section length (see 740) associated with ray 710. Cross-section length 740 may represent a distance between entry point 720 and exit point 730 along specific ray 710 associated with a particular pixel on detector 222.

### (a) Scatter correction

At 611 in FIG. 6, based on surface data 110, computer system 240 may perform scatter correction to mitigate the effects of scattered radiation from projection image data 120, thereby enhancing its clarity and contrast. Scattered radiation, which occurs when X-rays deviate from their original path, may cause blurring and reduced contrast. In practice, projection-based scatter correction may involve a pencil-beam type approach, where multiple scatter estimates are calculated for respective multiple pencil beams (e.g., one per pixel). The total scatter signal per projection may be calculated by accumulating individual pencil beam scatter estimates.

According to examples of the present disclosure, additional data (e.g., entry point 720, exit point 730 and cross-section length 740) derivable from surface data 110 may be used to remove or refine certain conventional assumptions associated with scatter correction approaches that do not rely on surface data 110. These assumptions are usually made because X-ray images provide limited data, particularly regarding the amount of transmission of the signal (or its attenuation) along the beam path. For example, from projection image data 120 alone, it is usually not possible to determine where imaging beam 213 enters or exits patient 201, nor the material composition of patient 201 along the beam path.

Using examples of the present disclosure, one assumption that may be removed or refined is that the object or subject (e.g., patient 201) is composed of water with nominal density. It has been observed that this assumption is not always accurate. For example, a ray through the thorax may encounter variations such as ribs and lung tissue, etc. Another assumption involves the center of mass along the ray path being located on an iso-plane (i.e., a plane parallel to a panel associated with iso-center 202), which may be used to estimate beam entry and exit points. However, for off-centered scans, the center of mass may deviate from iso-center 202 and the iso-plane for various angles. Additionally, in regions like the thorax, the mass may not be equally distributed. Using surface data 110, one or more of these assumptions may be removed or refined, leading to improved calculation of first pass projection-based scatter estimates.

### (b) Beam hardening correction

At 612 in FIG. 6, based on surface data 110, computer system 240 may perform beam hardening correction to compensate for the effects of beam hardening on projection image data 120, where lower energy X-rays are absorbed more than higher energy X-rays as they pass through a subject for polychromatic X-ray sources. By applying beam hardening correction, projection image data 120 may be adjusted to account for differential energy absorption, thereby improving image quality.

For example, beam hardening correction may be performed based on an assumption that an object or subject (e.g., patient 201) being imaged is made of water with nominal density, which is translated into a water length. Based on surface data 110, computer system 240 may perform a comparison by determining whether (a) a particular cross-section length (see 740 in FIG. 7) associated with patient 201 matches with or equals to (b) a water length from the measured transmission. If not, additional adjustments may be made to enhance the accuracy of beam hardening correction.

For example, in response to determination that cross-section length 740 derived from surface data 110 is less than the water length from the measured transmission, it may be assumed that the extra length (and material) comes from high-density structures, such as bone tissue, etc. Conversely, in response to determination that cross-section length 740 exceeds the water length from the measured transmission, the missing water material may be substituted with lower-density structures, such as lung tissue along the beam path, etc. These adjustments may be made to reduce errors associated with conventional assumptions.

Depending on the desired implementation, beam hardening correction may be performed as a standalone process, or in combination with additional operation(s), such as intensity-to-attenuation mapping using log normalization, intensity-to-material-length mapping, any combination thereof, etc. Log normalization may involve applying a logarithmic transformation to raw X-ray projection image data, such as to linearize the relationship between the measured intensities and the attenuation properties of the imaged object/subject. In practice, log normalization may be a relatively simple and reversible operation, expressed as ***P*** = -log (***I*/*I*0**), where ***I*** = intensity-based image data is mapped to ***P*** = attenuation-based image data based on reference data (***I*0**)***.*** When combined with log normalization, beam hardening correction may be expressed as ***P'** = BHC*(***P**,**I**,****I*0***,**S***)*,* where processed projection image data (***P'***) is generated based on input data (***P***,***I***,***I*0**,***S***). Additionally, the intensity-based image data (***I***) may also be mapped into specific material length(s), such as water length or other material length.

### (d) Detruncation

At 613 in FIG. 6, computer system 240 may generate processed projection image data 140 by performing detruncation on projection image data 120 to remove or alleviate the effects of truncation. In this example, projection image data 120 may have insufficient data due to limitations of imaging system 220. One example scenario is when data-incomplete trajectories (e.g., CBCT short arc) are used during the acquisition of projection mage data 120. Another example scenario is when scanned objects are truncated (i.e., not fully visible in the imaging system field). In this case, surface data 110 may provide additional data to alleviate or reduce the data insufficiency issue.

In practice, truncation in imaging often occurs at the extremities of patient 201, such as soft tissues or fat. Since truncation leads to incomplete projection image data 120, it is desirable to address or alleviate the effects of truncation to improve the accuracy of image reconstruction. One approach is to approximate truncated or missing regions as water material. Using this approximation, the missing regions may be restored (detruncated or extrapolated) at the projection space by performing a forward projection of an object (convex hull *S*) made of water.

Examples of the present disclosure should be contrasted against conventional projection-based detruncation approaches. Without S, these approaches may assume that the patient's outline in the axial plane follows an elliptical shape. These approaches attempt to fit an ellipse to the observed partial profile in the projection data and extend the projection accordingly. However, such parametrized ellipses may oversimplify the complexity of human anatomy, resulting in inaccuracies in the restored projection image data. Using surface data 110, the detruncation operation at block 613 may become more robust and anatomically informed, reducing errors and enhancing the fidelity of reconstructed images.

Depending on the desired implementation, computer system 240 may perform any additional or alternative pre-processing operations, such as hardware defect correction, non-linearity correction, or any combination thereof, etc. Hardware defect correction may involve identifying and correcting any defect(s) in the detector system (e.g., detector 222). For example, defects (e.g., dead pixels or areas with inconsistent responses) may cause artifacts in projection image data 120 as well as the resulting volume image data. Non-linearity correction may be performed to compensate for the non-linear response of the detector system. This is because detectors may not respond linearly to varying radiation intensities, causing distortions in projection image data 120. Correcting these non-linearities ensures a more accurate representation of the true distribution of the radiation.

### Example image reconstruction

Using a combination of imaging system 220 and surface monitoring system, a mass/object/patient envelope may be established from surface data 110, and any suitable couch data associated with couch 203, to constrain the solution of image reconstruction. This is based on the knowledge that the overall mass seen on projection image data 120 is contained inside the envelope. This may lead to a reduction of artifacts outside of the scanned object/body, especially possible fake inconsistency induced mass in air-only regions produced by iterative methods. This may also lead to a reduction of reconstruction time, such as by skipping air voxels and respective air pixels detected from geometric constraints provided by surface data 110. Examples of the present disclosure should be contrasted against conventional approaches that merely rely on prior image data obtained from previous image acquisitions and/or generic patient models.

Referring to FIG. 6 again, at 630/650, computer system 240 may perform surface-guided image reconstruction based on ***S*** 110 and ***P*'** 620/640. Two examples of iterative reconstruction are shown in FIG. 6. At 630 in FIG. 6, computer system 240 may perform iterative reconstruction according to an algebraic reconstruction technique (ART) to generate ART volume image data 632. In practice, ART may refer generally to an iterative reconstruction technique that solves a system of linear equations derived from projection data, updating values iteratively. For example, a volume image data estimate may be updated voxel by voxel in the reconstruction space, using the contributions from each projection.

Alternatively or additionally, at 650 in FIG. 6, computer system 240 may perform iterative reconstruction according to a penalized likelihood (PL) technique to generate PL volume image data 652. Any additional and/or alternative technique may be implemented. In practice, PL is an approach that maximizes a likelihood function with an added penalty term to achieve desired properties (e.g., smoothness) in the reconstructed image. In practice, PL may also be referred to as model-based iterative reconstruction (MBIR) or statistical iterative reconstruction (SIR).

Note that normalized projection image data 620 may be used at block 630 because ART generally operates in attenuation value space, i.e., the same space as ART volume image data 632. This may simplify the reconstruction process but may not fully leverage the statistical properties of the data. In contrast, denormalized projection image data 640 may be used at block 650 because PL generally operates in intensity space. Here, denormalization may be performed to more accurately model the statistical nature of the acquisition system, such as using Poisson distribution models, etc.

### (a) Iterative reconstruction

FIG. 8 is a flowchart of an example process (see 800) for computer system 240 to implement iterative image reconstruction in the example in FIG. 6. First, initial volume image data 801 may be initialized and used as current volume image data 802. Then, at 810 in FIG. 8, volume image data 802 (i.e., initial volume 801 in the first iteration or an updated version thereafter) may be subjected to forward projection, where 2D simulated projection data 820 is generated by projecting initial volume 801 onto the same or similar detector geometry used during the acquisition of projection image data 120.

At 840 in FIG. 8, simulated projection data 820 may be compared with measured projection data 830 to determine difference data (see 850) representing any error between them. Note that measured projection data 830 may be ***P*** 120 for block 152 in FIG. 1 or ***P'*** 140 for block 151 or 153. Using the example in FIG. 6, measured projection data 830 may be normalized ***P'*** 620 or denormalized ***P'*** 640. Next, at 860, difference data 850 may be subjected to backprojection to generate iterative gradient data (3D) 870. Backprojection 860 is an inverse or approximate inverse process to that of forward projection 810.

At 880 in FIG. 8, it is determined whether a stopping condition has been met, such as whether gradient data 870 has vanished (i.e., convergence achieved) or a maximum number of iterations has been reached. If yes, the iterative process ends, in that the final output is volume image data 802. Otherwise, at 890, volume image data 802 may be updated based on gradient data 870 to reduce the error, and the cycle of forward projection and backprojection continues iteratively.

### (b) Surface-guided regularization

Depending on the desired implementation, regularization may be performed based on surface data 110 according to blocks 152-153 in FIG. 1. In practice, regularization may incorporate prior knowledge or constraints into the reconstruction process to improve stability and ensure more meaningful solutions for volume image data 802. In the example in FIG. 8, computer system 240 may implement model-based regularization (see 895) based on an objective function (*f_{obj}*)*,* which includes a data fidelity term and a regularization term that is parameterized by ***S**.* One example representation of *f_{obj}* is: ${f}_{obj} = X \left(V\right) - P + model \left(V, S\right) .$

The data fidelity term (e.g., *X*(***V***) *- **P***) may ensure that the reconstructed image remains substantially consistent with measured projection image data 830. The regularization term (e.g., *model*(***V,S***)) may incorporate prior knowledge or constraint(s) from ***S*** 110 to guide the reconstruction process. By optimizing the objective function, a desired balance between the data fidelity and regularization terms may be achieved, ensuring a more accurate representation of measured projection image data 830 while adhering to the surface-related constraints imposed by *model*(***V, S***)*.* Note that regularization may be performed at any suitable stage during the iterative reconstruction process (i.e., not necessarily at block 895).

Any suitable regularization model may be configured. In a first example, at block 631 in FIG. 6, ART iterative reconstruction with regularization may involve minimizing a first cost function in the form of: ${argmin}_{f} \left\{{\left‖p-Xf\right‖}^{2}+{β}_{ART}{\left‖f\right‖}_{TV}+{γ}_{ART}{\left‖f∗{\left〈f, S\right〉}_{SD}\right‖}^{2}\right\} .$

In the above cost function, ∥*p - Xf*∥² may represent a data fidelity term to ensure consistency between a reconstructed image (*f*) and measured attenuation-space projection data (*p*). Two regularization terms may be used. A first regularization term (*β_{ART}*∥*f*∥*_{TV}*) is based on a total variation (TV) metric and weighted by a first weighting factor (*β_{ART}*)*.* A second regularization term (*γ_{ART}*∥*f** 〈*f*,*S*〉*_{SD}*∥²) is based on a surface distance (SD) metric (〈*f, S*〉*_{SD}*) and weighted by a second weighting factor (*γ_{ART}*)*.* ∥*f* * 〈*f,s*〉*_{SD}*∥² is for penalizing voxels lying outside of *S* and having a non-zero (non-air) value. Any suitable weighting factors may be used.

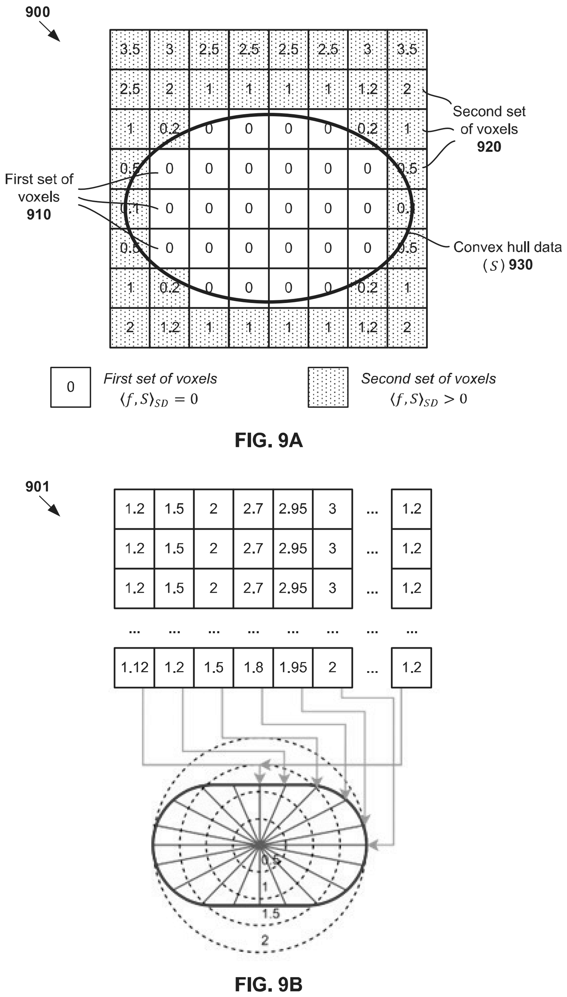

The SD metric, 〈*f, S*〉*_{SD},* may be determined to guide the reconstruction process based on surface data 110 that includes convex hull data (*S*); see 550 in FIG. 5. The SD metric associated with a voxel may be calculated based on whether the voxel lies within or outside of *S* (i.e., the voxel's location), and/or a distance between the voxel and *S*. For example, 〈*f, S*〉*_{SD},* may be zero for voxels lying inside *S*, or distance to *S* for voxels outside of S. Some examples are shown in FIG. 9A, which is an example voxelized distance map (see 900) associated with surface data 110 that includes convex hull data (*S*). At 910 and 930 in FIG. 9A, 〈*f,S*〉*_{SD}* = 0 for a first set of voxels lying inside *S.* At 920 in FIG. 9A, 〈*f,S*〉*_{SD}* > 0 for a second set of voxels lying outside S.

In a second example, at block 651 in FIG. 6, PL iterative reconstruction with regularization may involve minimizing a second cost function in the form of: ${argmin}_{f} \left\{{\left‖q-{e}^{- Xf}\right‖}^{2}+{β}_{PL}{\left‖f\right‖}_{TV}+{γ}_{PL}{\left‖f∗{\left〈f, S\right〉}_{SD}\right‖}^{2}\right\} .$

In the above cost function, ∥*q - e^{-Xf}*∥*²* represents a data fidelity term to ensure consistency between a reconstructed image (*f*) and measured intensity-space projections (*q*). Note that ∥*q - q*₀*e^{-Xf}*∥² may be used instead, where *q*₀ represents air intensity. Also, two regularization terms may be used. A first regularization term (*β_{PL}*∥*f*∥*_{TV}*) is based on a total variation (TV) metric and weighted by a first weighting factor (*β_{ART}*). A second regularization term (*γ_{PL}*∥*f* * 〈f,*S*〉*_{SD}*∥²) is based on an SD metric (〈*f,S*〉*_{SD}*) and weighted by a second weighting factor (*γ_{PL}*)*.* Similarly, 〈*f,S*〉*_{SD}* is a metric for guiding the reconstruction process based on convex hull data (*S*). ∥*f* * 〈*f,S*〉*_{SD}*∥² is for penalizing voxels lying outside of *S* and having a non-zero (non-air) value

When using a cylindrical coordinate representation for depth map data (see 540-541 in FIG. 5), the estimation of an entry point (see 720 in FIG. 7) along a ray (depth) may be a single or series of 2D lookup operations. An example is shown in FIG. 9B, which is an example 2D cylindrical depth map (see 901) associated with surface data 110 that includes convex hull data (*S*). Low angular sampling is used for simplicity. In this example, depth map 901 may be normalized to have a zero value at an iso-center, and a non-zero value as the distance from the iso-center increases. When using more advanced representations, such as triangle or quad meshes (see 540 and 542 in FIG. 5), ray-tracing techniques may be used to estimate the entry and exit points (see 720-730 in FIG. 7).

### Example post-processing

Referring to FIG. 6 again, at 660, computer system 240 may perform post-processing based on ART volume image data 632 and/or PL volume image data 652 to generate final volume image data 670. Any suitable post-processing operation(s) may be performed at block 660, such as any combination of one or more of: cropping, Hounsfield Unit (HU) mapping, ring suppression, denoising, contrast enhancement, etc. Cropping (see 661) may be performed to remove any unnecessary or irrelevant parts of the image, focusing on a preferred area of interest, and/or reducing the amount of data stored and processed.

HU mapping (see 662) may be performed to convert the raw reconstructed data into standardized Hounsfield Units, which are used to quantify the radiodensity of tissues. In practice, CBCT imaging systems for radiation therapy may also produce electron-density (ED) values, not only HU. Ring suppression (see 663) may be performed to reduce or eliminate ring artifacts that may appear due to imperfections in the detector system or inconsistencies in the data acquisition process. Denoising (see 664) may be used to reduce image noise within the reconstructed volume. Contrast enhancement (see 665) allows visualization of differently absorbing structures in a single view without adaptation of window/level. One or more of these post-processing steps may be implemented to enhance usability and accuracy, contributing to better clinical outcomes.

### Al-based approach

Depending on the desired implementation, block 150 in FIG. 1 may be implemented using an AI engine that is trained to perform image reconstruction. As used herein, the term "AI engine" may refer to any suitable hardware and/or software components of a computer system capable of executing algorithms according to any suitable AI model(s). An "AI engine" may be a machine learning engine based on machine learning model(s), deep learning engine based on deep learning model(s), etc. In general, deep learning is a subset of machine learning in which multi-layered neural networks may be used for feature extraction as well as pattern analysis and/or classification.

Any suitable AI model(s) may be used, such as convolutional neural network, recurrent neural network, deep belief network, generative adversarial network (GAN), autoencoder(s), variational autoencoder(s), long short-term memory architecture for tracking purposes, generative AI model, transformer network, or any combination thereof, etc. In practice, a neural network is generally formed using a network of processing elements (called "neurons," "nodes," etc.) that are interconnected via connections (called "synapses," "weight data," etc.). A processing layer of a convolutional neural network may be a convolutional layer, pooling layer, un-pooling layer, rectified linear units (ReLU) layer, fully connected layer, loss layer, activation layer, dropout layer, transpose convolutional layer, concatenation layer, attention layer, any combination thereof, etc. For example, convolutional neural networks may be implemented using any suitable architecture(s), such as UNet, LeNet, AlexNet, ResNet, VNet, DenseNet, OctNet, etc.

FIG. 10A is a schematic diagram illustrating a first example AI engine (see 1010) to perform image reconstruction based on processed projection image data. Here, first AI engine 1010 may be trained to process and map (a) input data = processed projection image data (***P'***) 140 to (b) output data = volume image data (V) 160. AI engine 1010 may include a hierarchy of multiple (N) processing layers (denoted as *A*₁ to *A_{N}*)*,* such as an input layer, an output layer, and multiple hidden layers between the input and output layers. The processing layers (*A*₁ to *A_{N}*) are associated with respective weight data (*w*₁ to *w_{N}*). During training, AI engine 1010 may learn weight data (*w*₁ to *w_{N}*) to perform image reconstruction based on ***P'*** 140.

FIG. 10B is a schematic diagram illustrating a second example AI engine (see 1020) to perform image reconstruction based on surface data 110 and projection image data 120. Here, second AI engine 1020 may be trained to process and map (a) input data = (***S***, ***P***) to (b) output data = volume image data (***V***) 160. Second AI engine 1020 may include a hierarchy of multiple (*N*) processing layers (denoted as *B*₁ to *B_{N}*)*,* such as an input layer, an output layer, and multiple hidden layers between the input and output layers. The processing layers (*B*₁ to *B_{N}*) are associated with respective weight data (*w*₁ to *w_{N}*). During training, second AI engine 1020 may learn weight data (*w*₁ to *w_{N}*) to perform image reconstruction based on (***S**, **P***).

FIG. 10C is a schematic diagram illustrating a third example AI engine (see 1030) to perform image reconstruction based on surface data and processed projection image data. Here, third AI engine 1030 may be trained to process and map (a) input data = (***S**, **P'***) to (b) output data = volume image data (***V***) 160. Third AI engine 1030 may include a hierarchy of multiple *(N)* processing layers (denoted as *C*₁ to *C_{N}*)*,* such as an input layer, an output layer, and multiple hidden layers between the input and output layers. The processing layers (*C*₁ to *C_{N}*) are associated with respective weight data (*w*₁ to *w_{N}*). During training, third AI engine 1030 may learn weight data (*w*₁ to *w_{N}*) to perform image reconstruction based on (***S*, *P'***)*.* Note that AI engines 1010-1030 may have the same or different number (N) of processing layers.

AI engine 1010/1020/1030 may be trained using any suitable approach, such as supervised learning, unsupervised learning, semi-supervised learning, reinforcement learning, etc. For example, using supervised learning, AI engine 1010/1020/1030 may be trained on a dataset of labeled examples in order to learn the relationship between (a) input data and (b) output data. Any suitable training data may be used, such as synthetic data, real patient data, or a combination of both. AI engine 1010/1020/1030 may be trained using training data that is specific to patient 201, or a large variation of possible patients. For example, a patient-specific training strategy may tackle the issue of inter-patient and inter-tumor variations (e.g., tumor size, shape, location, motion).

Alternatively, using unsupervised learning, AI engine 1010/1020/1030 may be trained on a dataset of unlabeled examples to learn patterns and relationships in the data without any prior knowledge of the output labels. In semi-supervised learning, both labeled and unlabeled data may be used. Semi-supervised learning is useful in situations where there is a large amount of unlabeled data available, but it might be too expensive or difficult to label all the data. In reinforcement learning, AI engine 1010/1020/1030 may learn to perform image reconstruction by trial and error where it is rewarded for taking actions that lead to desired outcomes and penalized for taking actions that lead to undesired outcomes.

### Image reconstruction during pre-treatment phase

Although described using the examples in FIGs. 3-4, computer system 240 may be configured to perform surface-guided image reconstruction during a pre-treatment phase of radiation therapy, such as for diagnosis and treatment planning purposes. High-quality reconstructed images are important for segmentation, which identifies and delineates a target tumor and surrounding healthy tissues. Based on the segmentation, an effective treatment plan may be developed to deliver radiation doses to the tumor while sparing the healthy tissues.

An example is shown in FIG. 11, which is a schematic illustrating an example system (see 1100) for surface-guided image reconstruction during a pre-treatment phase of radiation therapy. Imaging system 220 may implement any suitable imaging modality for image data acquisition, such CT, PET, SPECT, MRI, MRT, any combination thereof, etc. For example, when CT is used, projection image data 120 (e.g., planning CT scan) may include a series of 4D projection images or slices (e.g., CT slices), each representing a cross-sectional view of the patient's anatomy. For treatment planning, projection image data 120 may include 4D volumetric CT data that is used (sometimes in combination with 5D CT) to estimate the motion range of target structure(s). For example, spectral CT data (e.g., dual energy CT (DECT) and photon counting CT) may be acquired instead or additionally to provide access to various quantities at the planning stage.

In the example in FIG. 11, gantry 1110 has a ring-based configuration. In an alternative example, gantry may have a C-arm configuration. Imaging system 220 may include imaging or radiation source 221 (e.g., X-ray source) to project imaging beams 223 towards detector 222 having pixel detectors disposed opposite of source 221. Control system 250 may be electrically coupled to gantry 1110 to control the latter's operations using control signal(s) 251. Radiation source 221 may be configured to generate any suitable beam, such as fan beam, etc.

During an imaging procedure, gantry 1110 may be rotated about opening 1120 while radiation source 221 generates and directs X-ray beam(s) 223 along a projection line towards patient 201 and detector 222. Detector 222 may measure the X-ray absorption and produce a voltage proportional to the intensity of incident X-rays. The voltage may be read and digitized to generate projection image data 120. Projection image data 120 may include image data acquired at different gantry angles.

Similar to the examples in FIGs. 3-4, surface monitoring system 230 that includes multiple pods 310-330 and surface data generator 340 may be installed in an imaging room. Computer system 240 may be configured to perform surface-guided image reconstruction according to the examples described using FIGs. 1-10, the explanation of which will not be repeated here for brevity.

### Computer system

The above examples may be implemented by hardware (including hardware logic circuitry), software or firmware or a combination thereof. The above examples may be implemented by any suitable computing device, computer system, etc. The computer system may include processor(s), memory unit(s) and physical NIC(s) that may communicate with each other via a communication bus, etc. The computer system may include a non-transitory computer-readable medium having stored thereon instructions or program code that, when executed by the processor, cause the processor to perform processes described herein with reference to the drawings.

The techniques introduced above may be implemented in special-purpose hardwired circuitry, in software and/or firmware in conjunction with programmable circuitry, or in a combination thereof. Special-purpose hardware or hardwired circuitry may be in the form of, for example, one or more accelerators to accelerate computational tasks relating to image reconstruction, application-specific integrated circuits (ASICs), programmable logic devices (PLDs), field-programmable gate arrays (FPGAs), and others. The term "processor" is to be interpreted broadly to include a processing unit, ASIC, logic unit, or programmable gate array etc. The term "accelerator" may refer generally to any suitable hardware or other computation processing unit (e.g., high-performance computation processing unit, etc.) for accelerating computational tasks, such as graphics processing units (GPUs), tensor processing units (TPUs), neural processing units (NPUs), etc. Any alternative processor architecture(s) may be used, such as hybrid architecture (known as XPU) that is designed to handle a variety of workloads by combining different types of processing units, etc.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or any combination thereof.

Those skilled in the art will recognize that some aspects of the embodiments disclosed herein, in whole or in part, may be equivalently implemented in integrated circuits, as one or more computer programs running on one or more computers (e.g., as one or more programs running on one or more computing systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure.

Software to implement the techniques introduced here may be stored on a non-transitory computer-readable storage medium and may be executed by one or more general-purpose or special-purpose programmable microprocessors. A "computer-readable storage medium", as the term is used herein, includes any mechanism that provides (i.e., stores and/or transmits) information in a form accessible by a machine (e.g., a computer, network device, personal digital assistant (PDA), mobile device, manufacturing tool, any device with a set of one or more processors, etc.). A computer-readable storage medium may include recordable/non recordable media (e.g., read-only memory (ROM), random access memory (RAM), magnetic disk or optical storage media, flash memory devices, etc.).

The drawings are only illustrations of an example, wherein the units or procedure shown in the drawings are not necessarily essential for implementing the present disclosure. Those skilled in the art will understand that the units in the device in the examples may be arranged in the device in the examples as described or may be alternatively located in one or more devices different from that in the examples. The units in the examples described may be combined into one module or further divided into a plurality of sub-units.

### Example clauses

Further aspects of these teachings are provided by the subject matter of the following clauses (where it will be understood that any of these clauses may be combined with one or more of the other clauses as appropriate). Depending on the desired implementation, clause 2 may be combined with clause 1; clause 3 with clause 1 and/or clause 2; clause 4 with one or more of clauses 1-3; clause 5 with one or more of clauses 1-4; clause 6 with one or more of clauses 1-5, and clause 7 with one or more of clauses 1-6. This also applies to clause 9 (may be combined with one or more of clauses 10-16); clause 17 (may be combined with one or more of clauses 18-24); clause 25 (may be combined with one or more of clauses 26-32); and clause 33 (may be combined with one or more of clauses 34-40).

Clause 1. A computer system to perform image reconstruction, comprising: a processor; and a non-transitory computer-readable medium having stored thereon instructions that, when executed by the processor, cause the processor to perform the following: obtain surface data associated with a patient, wherein the surface data is generated using a surface monitoring system; obtain projection image data associated with the patient, wherein the projection image data is acquired using an imaging system; and perform image reconstruction to generate volume image data associated with the patient based on one of the following: (a) processed projection image data that is generated based on the projection image data and the surface data; (b) the surface data and the projection image data; and (c) the surface data and the processed projection image data.

Clause 2. The computer system of clause 1, wherein the instructions for performing the image reconstruction cause the processor to: perform iterative image reconstruction based on a regularization model that includes a parameter associated with the surface data.

Clause 3. The computer system of clause 2, wherein the instructions for performing the image reconstruction cause the processor to: perform iterative image reconstruction based on the regularization model that includes the parameter in the form of a surface distance (SD) metric, wherein the surface data identifies a convex hull representing a surface of the patient, and the SD metric associated with a voxel is calculated based on whether the voxel lies within or outside of the convex hull or a distance between the voxel and the convex hull.

Clause 4. The computer system of one or more of clauses 1-3, wherein the instructions further cause the processor to: generate the processed projection image data by performing one or more pre-processing operations on the projection image data based on the surface data, wherein a particular pre-processing operation is one of the following: scatter correction, beam hardening correction, and detruncation.

Clause 5. The computer system of clause 4, wherein the instructions further cause the processor to: process the surface data to determine an entry point, an exit point or a cross-section length associated with a ray emitted by the imaging system towards the patient during acquisition of the projection image data; and generate the processed projection image data by performing one or more pre-processing operations on the projection image data based on at least the entry point, the exit point or the cross-section length.

Clause 6. The computer system of one or more of clauses 1-5, wherein the instructions for obtaining the surface data cause the processor to: obtain, from the surface monitoring system, the surface data that represents a surface of the patient, wherein the surface data includes one or more of: 3D point cloud data, 2D depth map data and convex hull data.

Clause 7. The computer system of one or more of clauses 1-6, wherein the instructions for obtaining the surface data cause the processor to: obtain the surface data from the surface monitoring system that includes: one or more cameras to capture camera image data associated with a surface of the patient; and a surface data generator to generate the surface data based on the camera image data.

Clause 8. The computer system of one or more of clauses 1-7, wherein the instructions for performing the image reconstruction cause the processor to perform one of the following: process, using a first AI engine, the processed projection image data to generate the volume image data; process, using a second AI engine, the surface data and the projection image data to generate the volume image data; and process, using a third AI engine, the surface data and the processed projection image data to generate the volume image data.

Clause 9. A system for image reconstruction, comprising: a surface monitoring system to generate surface data associated with a patient positioned on a couch; an imaging system that includes an imaging source and a detector to acquire projection image data associated with the patient; and a computer system to: obtain the surface data generated using a surface monitoring system; obtain the projection image data acquired using the imaging system; and perform image reconstruction to generate volume image data associated with the patient based on at least one of the following: (a) processed projection image data that is generated based on the projection image data and the surface data; (b) the surface data and the projection image data; and (c) the surface data and the processed projection image data.

Clause 10. The system of clause 9, wherein the computer system is configured to perform the image reconstruction by: performing iterative image reconstruction based on a regularization model that includes a parameter associated with the surface data.

Clause 11. The system of clause 10, wherein the computer system is configured to perform the image reconstruction by: performing iterative image reconstruction based on the regularization model that includes the parameter in the form of a surface distance (SD) metric, wherein the surface data identifies a convex hull representing a surface of the patient, and the SD metric associated with a voxel is calculated based on whether the voxel lies within or outside of the convex hull or a distance between the voxel and the convex hull.

Clause 12. The system of one or more of clauses 9-11, wherein the computer system is further configured to: generate the processed projection image data by performing one or more pre-processing operations on the projection image data based on the surface data, wherein a particular pre-processing operation is one of the following: scatter correction, beam hardening correction, and detruncation.

Clause 13. The system of clause 12, wherein the computer system is further configured to: process the surface data to determine an entry point, an exit point or a cross-section length associated with a ray emitted by the imaging system towards the patient during acquisition of the projection image data; and generate the processed projection image data by performing one or more pre-processing operations on the projection image data based on at least the entry point, the exit point or the cross-section length.

Clause 14. The system of one or more of clauses 9-13, wherein the computer system is configured to obtain the surface data by: obtaining, from the surface monitoring system, the surface data that represents a surface of the patient, wherein the surface data includes one or more of: 3D point cloud data, 2D depth map data and convex hull data.

Clause 15. The system of one or more of clauses 9-14, wherein the computer system is configured to obtain the surface data by: obtaining the surface data from the surface monitoring system that includes: one or more cameras to capture camera image data associated with a surface of the patient; and a surface data generator to generate the surface data based on the camera image data.

Clause 16. The system of one or more of clauses 9-15, wherein the computer system is configured to perform the image reconstruction by: processing, using a first AI engine, the processed projection image data to generate the volume image data; processing, using a second AI engine, the surface data and the projection image data to generate the volume image data; or processing, using a third AI engine, the surface data and the processed projection image data to generate the volume image data.

Clause 17. A method for a computer system to perform image reconstruction, wherein the method comprises: obtaining, by the computer system, surface data associated with a patient positioned on a couch, wherein the surface data is generated using a surface monitoring system; obtaining, by the computer system, projection image data associated with the patient, wherein the projection image data is acquired using an imaging system; and performing, by the computer system, image reconstruction to generate volume image data associated with the patient based on at least one of the following: (a) processed projection image data that is generated based on the projection image data and the surface data; (b) the surface data and the projection image data; and (c) the surface data and the processed projection image data.

Clause 18. The method of clause 17, wherein performing the image reconstruction comprises: performing iterative image reconstruction based on a regularization model that includes a parameter associated with the surface data.

Clause 19. The method of clause 18, wherein performing the image reconstruction comprises: perform the iterative image reconstruction based on the regularization model that includes the parameter in the form of a surface distance (SD) metric, wherein the surface data identifies a convex hull representing a surface of the patient, and the SD metric associated with a voxel is calculated based on whether the voxel lies within or outside of the convex hull or a distance between the voxel and the convex hull.

Clause 20. The method of one or more of clauses 17-19, further comprising: generating the processed projection image data by performing one or more pre-processing operations on the projection image data based on the surface data, wherein a particular pre-processing operation is one of the following: scatter correction, beam hardening correction, and detruncation.

Clause 21. The method of clause 20, wherein generating the processed projection image data comprises: processing the surface data to determine an entry point, an exit point or a cross-section length associated with a ray emitted by the imaging system towards the patient during acquisition of the projection image data; and generating the processed projection image data by performing one or more pre-processing operations on the projection image data based on at least the entry point, the exit point or the cross-section length.

Clause 22. The method of one or more of clauses 17-21, wherein obtaining the surface data comprises: obtaining, from the surface monitoring system, the surface data that represents a surface of the patient, wherein the surface data includes one or more of: 3D point cloud data, 2D depth map data and convex hull data.

Clause 23. The method of one or more of clauses 17-22, wherein obtaining the surface data comprises: obtaining the surface data from the surface monitoring system that includes: one or more cameras to capture camera image data associated with a surface of the patient; and a surface data generator to generate the surface data based on the camera image data.

Clause 24. The method of one or more of clauses 17-23, wherein performing the image reconstruction comprises: processing, using a first AI engine, the processed projection image data to generate the volume image data; processing, using a second AI engine, the surface data and the projection image data to generate the volume image data; or processing, using a third AI engine, the surface data and the processed projection image data to generate the volume image data.

Clause 25. A non-transitory computer-readable medium having stored thereon instructions that, when executed by a processor, cause the processor to perform the following: obtain surface data associated with a patient, wherein the surface data is generated using a surface monitoring system; obtain projection image data associated with the patient, wherein the projection image data is acquired using an imaging system; and perform image reconstruction to generate volume image data associated with the patient based on one of the following: (a) processed projection image data that is generated based on the projection image data and the surface data; (b) the surface data and the projection image data; and (c) the surface data and the processed projection image data.

Clause 26. The non-transitory computer-readable medium of clause 25, wherein the instructions for performing the image reconstruction cause the processor to: perform iterative image reconstruction based on a regularization model that includes a parameter associated with the surface data.

Clause 27. The non-transitory computer-readable medium of clause 26, wherein the instructions for performing the image reconstruction cause the processor to: perform iterative image reconstruction based on the regularization model that includes the parameter in the form of a surface distance (SD) metric, wherein the surface data identifies a convex hull representing a surface of the patient, and the SD metric associated with a voxel is calculated based on whether the voxel lies within or outside of the convex hull or a distance between the voxel and the convex hull.

Clause 28. The non-transitory computer-readable medium of one or more of clauses 25-27, wherein the instructions further cause the processor to: generate the processed projection image data by performing one or more pre-processing operations on the projection image data based on the surface data, wherein a particular pre-processing operation is one of the following: scatter correction, beam hardening correction, and detruncation.

Clause 29. The non-transitory computer-readable medium of clause 28, wherein the instructions further cause the processor to: process the surface data to determine an entry point, an exit point or a cross-section length associated with a ray emitted by the imaging system towards the patient during acquisition of the projection image data; and generate the processed projection image data by performing one or more pre-processing operations on the projection image data based on at least the entry point, the exit point or the cross-section length.

Clause 30. The non-transitory computer-readable medium of one or more of clauses 25-29, wherein the instructions for obtaining the surface data cause the processor to: obtain, from the surface monitoring system, the surface data that represents a surface of the patient, wherein the surface data includes one or more of: 3D point cloud data, 2D depth map data and convex hull data.

Clause 31. The non-transitory computer-readable medium of one or more of clauses 25-30, wherein the instructions for obtaining the surface data cause the processor to: obtain the surface data from the surface monitoring system that includes: one or more cameras to capture camera image data associated with a surface of the patient; and a surface data generator to generate the surface data based on the camera image data.

Clause 32. The non-transitory computer-readable medium of one or more of clauses 25-31, wherein the instructions for performing the image reconstruction cause the processor to perform one of the following: process, using a first AI engine, the processed projection image data to generate the volume image data; process, using a second AI engine, the surface data and the projection image data to generate the volume image data; and process, using a third AI engine, the surface data and the processed projection image data to generate the volume image data.

Clause 33. A computer program comprising instructions which, when the computer program is executed by a computer, cause the computer to perform the following: obtain surface data associated with a patient, wherein the surface data is generated using a surface monitoring system; obtain projection image data associated with the patient, wherein the projection image data is acquired using an imaging system; and perform image reconstruction to generate volume image data associated with the patient based on one of the following: (a) processed projection image data that is generated based on the projection image data and the surface data; (b) the surface data and the projection image data; and (c) the surface data and the processed projection image data.

Clause 34. The computer program of clause 33, wherein the instructions for performing the image reconstruction cause the computer to: perform iterative image reconstruction based on a regularization model that includes a parameter associated with the surface data.

Clause 35. The computer program of clause 34, wherein the instructions for performing the image reconstruction cause the computer to: perform iterative image reconstruction based on the regularization model that includes the parameter in the form of a surface distance (SD) metric, wherein the surface data identifies a convex hull representing a surface of the patient, and the SD metric associated with a voxel is calculated based on whether the voxel lies within or outside of the convex hull or a distance between the voxel and the convex hull.

Clause 36. The computer program of one or more of clauses 33-35, wherein the instructions further cause the computer to: generate the processed projection image data by performing one or more pre-processing operations on the projection image data based on the surface data, wherein a particular pre-processing operation is one of the following: scatter correction, beam hardening correction, and detruncation.

Clause 37. The computer program of clause 36, wherein the instructions further cause the computer to: process the surface data to determine an entry point, an exit point or a cross-section length associated with a ray emitted by the imaging system towards the patient during acquisition of the projection image data; and generate the processed projection image data by performing one or more pre-processing operations on the projection image data based on at least the entry point, the exit point or the cross-section length.

Clause 38. The computer program of one or more of clauses 33-37, wherein the instructions for obtaining the surface data cause the computer to: obtain, from the surface monitoring system, the surface data that represents a surface of the patient, wherein the surface data includes one or more of: 3D point cloud data, 2D depth map data and convex hull data.

Clause 39. The computer program of one or more of clauses 33-38, wherein the instructions for obtaining the surface data cause the computer to: obtain the surface data from the surface monitoring system that includes: one or more cameras to capture camera image data associated with a surface of the patient; and a surface data generator to generate the surface data based on the camera image data.

Clause 40. The computer program of one or more of clauses 33-39, wherein the instructions for performing the image reconstruction cause the computer to perform one of the following: process, using a first AI engine, the processed projection image data to generate the volume image data; process, using a second AI engine, the surface data and the projection image data to generate the volume image data; and process, using a third AI engine, the surface data and the processed projection image data to generate the volume image data.

Those skilled in the art will recognize that a wide variety of modifications, alterations, and combinations may be made with respect to the above described embodiments without departing from the scope of the invention, and that such modifications, alterations, and combinations are to be viewed as being within the ambit of the inventive concept.

## Claims

1. A non-transitory computer-readable medium having stored thereon instructions that, when executed by a processor, cause the processor to perform image reconstruction, by causing the processor to:
obtain surface data associated with a patient, wherein the surface data is generated using a surface monitoring system;
obtain projection image data associated with the patient, wherein the projection image data is acquired using an imaging system; and
perform image reconstruction to generate volume image data associated with the patient based on at least one of the following:
(a) processed projection image data that is generated based on the projection image data and the surface data;
(b) the surface data and the projection image data; and
(c) the surface data and the processed projection image data.

2. The medium of claim 1, wherein the instructions for performing the image reconstruction cause the processor to:
perform iterative image reconstruction based on a regularization model that includes a parameter associated with the surface data.

3. The medium of claim 2, wherein the instructions for performing the image reconstruction cause the processor to:
perform iterative image reconstruction based on the regularization model that includes the parameter in the form of a surface distance (SD) metric, wherein the surface data identifies a convex hull representing a surface of the patient, and the SD metric associated with a voxel is calculated based on whether the voxel lies within or outside of the convex hull or a distance between the voxel and the convex hull.

4. The medium of any preceding claim, wherein the instructions further cause the processor to:
generate the processed projection image data by performing one or more pre-processing operations on the projection image data based on the surface data, wherein a particular pre-processing operation is one of the following: scatter correction, beam hardening correction, and detruncation.

5. The medium of any preceding claim, wherein the instructions further cause the processor to:
process the surface data to determine an entry point, an exit point or a cross-section length associated with a ray emitted by the imaging system towards the patient during acquisition of the projection image data; and
generate the processed projection image data by performing one or more pre-processing operations on the projection image data based on at least the entry point, the exit point or the cross-section length;
and/or: wherein the instructions for obtaining the surface data cause the processor to:
obtain, from the surface monitoring system, the surface data that represents a surface of the patient, wherein the surface data includes one or more of: three-dimensional (3D) point cloud data, two-dimensional (2D) depth map data and convex hull data.

6. The medium of any preceding claim, wherein the instructions for obtaining the surface data cause the processor to:
obtain the surface data from the surface monitoring system that includes: one or more cameras to capture camera image data associated with a surface of the patient; and a surface data generator to generate the surface data based on the camera image data;
and/or:
wherein the instructions for performing the image reconstruction cause the processor to perform one of the following:
process, using a first artificial intelligence (AI) engine, the processed projection image data to generate the volume image data;
process, using a second AI engine, the surface data and the projection image data to generate the volume image data; and
process, using a third AI engine, the surface data and the processed projection image data to generate the volume image data.

7. A system, comprising:
a surface monitoring system to generate surface data associated with a patient positioned on a couch;
an imaging system that includes an imaging source and a detector to acquire projection image data associated with the patient; and
a computer system configured to:
obtain the surface data generated using a surface monitoring system;
obtain the projection image data acquired using the imaging system; and
perform image reconstruction to generate volume image data associated with the patient based on at least one of the following: (a) processed projection image data that is generated based on the projection image data and the surface data; (b) the surface data and the projection image data; and (c) the surface data and the processed projection image data.

8. The system of claim 7, wherein the computer system is configured to perform the image reconstruction by:
performing iterative image reconstruction based on a regularization model that includes a parameter associated with the surface data;
and optionally:
wherein the computer system is configured to perform the image reconstruction by:
performing iterative image reconstruction based on the regularization model that includes the parameter in the form of a surface distance (SD) metric, wherein the surface data identifies a convex hull representing a surface of the patient, and the SD metric associated with a voxel is calculated based on whether the voxel lies within or outside of the convex hull or a distance between the voxel and the convex hull.

9. The system of claim 7 or claim 8, wherein the computer system is further configured to:
generate the processed projection image data by performing one or more pre-processing operations on the projection image data based on the surface data, wherein a particular pre-processing operation is one of the following: scatter correction, beam hardening correction, and detruncation.

10. The system of claim 9, wherein the computer system is further configured to:
process the surface data to determine an entry point, an exit point or a cross-section length associated with a ray emitted by the imaging system towards the patient during acquisition of the projection image data; and
generate the processed projection image data by performing one or more pre-processing operations on the projection image data based on at least the entry point, the exit point or the cross-section length;
and/or:
wherein the computer system is configured to obtain the surface data by:
obtaining, from the surface monitoring system, the surface data that represents a surface of the patient, wherein the surface data includes one or more of: three-dimensional (3D) point cloud data, two-dimensional (2D) depth map data and convex hull data.

11. The system of any of claim 7 to claim 10, wherein the computer system is configured to obtain the surface data by:
obtaining the surface data from the surface monitoring system that includes: one or more cameras to capture camera image data associated with a surface of the patient; and a surface data generator to generate the surface data based on the camera image data;
and/or:
wherein the computer system is configured to perform the image reconstruction by:
processing, using a first artificial intelligence (AI) engine, the processed projection image data to generate the volume image data;
processing, using a second AI engine, the surface data and the projection image data to generate the volume image data; or
processing, using a third AI engine, the surface data and the processed projection image data to generate the volume image data.

12. A method for a computer system to perform image reconstruction, wherein the method comprises:
obtaining, by the computer system, surface data associated with a patient positioned on a couch, wherein the surface data is generated using a surface monitoring system;
obtaining, by the computer system, projection image data associated with the patient, wherein the projection image data is acquired using an imaging system; and
performing, by the computer system, image reconstruction to generate volume image data associated with the patient based on at least one of the following:
(a) processed projection image data that is generated based on the projection image data and the surface data;
(b) the surface data and the projection image data; and
(c) the surface data and the processed projection image data.

13. The method of claim 12, wherein performing the image reconstruction comprises:
performing, by the computer system, iterative image reconstruction based on a regularization model that includes a parameter associated with the surface data.

14. The method of claim 13, wherein performing the image reconstruction comprises:
performing, by the computer system, the iterative image reconstruction based on the regularization model that includes the parameter in the form of a surface distance (SD) metric, wherein the surface data identifies a convex hull representing a surface of the patient, and the SD metric associated with a voxel is calculated based on whether the voxel lies within or outside of the convex hull or a distance between the voxel and the convex hull.

15. The method of any of claim 12 to claim 14, further comprising:
generating, by the computer system, the processed projection image data by performing one or more pre-processing operations on the projection image data based on the surface data, wherein a particular pre-processing operation is one of the following: scatter correction, beam hardening correction, and detruncation.
